# EUROPÄISCHE PATENTSCHRIFT

(11) **EP 1 673 275 B1**
(45) Veröffentlichungstag und Bekanntmachung des Hinweises auf die Patenterteilung: **22.12.2010**
(21) Anmeldenummer: 04763903.4
(22) Anmeldetag: 07.08.2004
(51) Int. Cl.: B62D 65/06

(54) **Verfahren, Vorrichtung und Computerprogramm zur Schließkeilsimulation**
Process, device and computer program for simulation of a locking wedge
Procédé, dispositif et programme d'ordinateur pour simuler un coin de verrouillage

(30) Priorität: 18.10.2003 DE 10348500
(43) Veröffentlichungstag der Anmeldung: 28.06.2006
(73) Patentinhaber: inos Automationssoftware GmbH, 70563 Stuttgart (DE)
(72) Erfinder: TASSAKOS, Charalambos, 52146 Würselen (DE); METGE, Jan-Thomas, 70193 Stuttgart (DE)
(74) Vertreter: Wörz, Volker Alfred
(86) Internationale Anmeldenummer: PCT/EP2004/008875
(87) Internationale Veröffentlichungsnummer: WO 2005/035344

(56) Entgegenhaltungen:
- EP-A- 0 470 939
- DE-A- 4 120 555
- DE-A- 4 214 863
- US-A- 5 380 978

## Beschreibung

Die vorliegende Erfindung betrifft ein Verfahren zur Schließkeilsimulation vor einem Lackieren und vor einer Endmontage einer Karosserie eines Kraftfahrzeugs. Bei dem Verfahren wird eine Klappe des Kraftfahrzeugs, die relativ zu der übrigen Karosserie des Kraftfahrzeugs um eine Drehachse bewegbar ist, in eine bündig geschlossene Position relativ zu der übrigen Karosserie gebracht und dort gehalten, um anschließend die Spaltmaße und/oder den Versatz zwischen der Klappe in der bündig geschlossenen Position und der übrigen Karosserie des Kraftfahrzeugs zu erfassen Außerdem betrifft die Erfindung eine entsprechende Vorrichtung zur Durchführung des Verfahrens.

Im Rahmen der Montage von Kraftfahrzeugen werden unter anderem die Klappen eingebaut. Klappen sind insbesondere die Türen des Kraftfahrzeugs, aber auch die Motorhaube und der Kofferraumdeckel oder die Heckklappe. Die Klappen werden in entsprechende Einbauöffnungen in der Karosserie eingesetzt und in einer geeigneten Einbauposition an Scharnieren oder Gelenken an der Karosserie beweglich befestigt, so dass sie um eine Drehachse drehbar sind. Eine geeignete Einbauposition ist dadurch charakterisiert, dass die Klappen im Wesentlichen bündig mit der übrigen Karosserie bzw. mit bereits eingepassten angrenzenden Klappen abschließen und gleichmäßig zu der übrigen Karosserie bzw. zu den angrenzenden Klappen beabstandet sind. Man spricht in diesem Zusammenhang davon, dass in der Einbauposition vorgebbare Spaltmaße und ein Versatz eingehalten werden. In der feinjustierten Einbauposition kann die Klappe an der Karosserie beweglich festgelegt werden.

Aus der DE 41 20 555 A1 ist ein Verfahren zum Montieren einer Tür in einer Autokarosserie während der Endmontage der Fahrzeugkarosserie bekannt. Aus dem Stand der Technik ist darüber hinaus bekannt, eine Klappe an den Scharnieren oder Gelenken an der Karosserie in einer grobjustierten Einbauposition zu befestigen. In den Spalt zwischen der Klappe und der übrigen Karosserie bzw. den angrenzenden Klappen wird mindestens ein keilförmiges Element, ein sogenannter Schließkeil, eingesetzt, um die Klappe bündig zu der Karosserie in die Einbauöffnung einzupassen. Dann erfolgt die Feinjustage der Klappe derart, dass vorgebbare Spaltmaße möglichst genau eingehalten werden. Das Bewegen der Klappe in der Einbauöffnung sowie die Begutachtung der Spaltmaße und/oder des Versatzes erfolgt durch einen Arbeiter. Dabei muss stets darauf geachtet werden, dass der Schließkeil die Klappe noch bündig zu der Karosserie hält. Schließlich wird die Klappe in der feinjustierten Einbauposition an den Scharnieren oder Gelenken beweglich an der Karosserie festgelegt. Der Einsatz eines Schließkeils ist jedoch sehr aufwendig und führt zu relativ ungenauen, nur schlecht reproduzierbaren und dokumentierbaren Ergebnissen.

Ein anderes Verfahren bzw. eine andere Vorrichtung zum Einstellen der Spaltmaße und/oder eines Versatzes zwischen einer beweglichen Klappe eines Kraftfahrzeugs und der übrigen Karosserie ist auch in der DE 102 51 393 A1 ausführlich beschrieben. In dieser Patentanmeldung die die Oberbegriffe der Ansprüche 1 und 7 definiert, ist eine sogenannte mechanische Schließkeilsimulation beschrieben, welche sich dadurch auszeichnet, dass die Klappe in der grobjustierten Einbauposition zur Feinjustage durch einen pneumatischen Sauger gegen einen mechanischen Anschlag gezogen wird, wobei der mechanische Anschlag in einem festen Bezug relativ zu der übrigen Karosserie steht und um eine im Wesentlichen vertikal verlaufende Drehachse frei verschwenkbar ist. Der mechanische Anschlag stellt also gewissermaßen eine Extrapolation der Fläche der übrigen der Karosserie dar, relativ zu der die Spaltmaße und/oder der Versatz der Klappe eingestellt werden soll. Durch den pneumatischen Sauger wird die Klappe gegen den mechanischen Anschlag und damit in die Fläche der übrigen Karosserie gezogen, so dass sie mit der übrigen Karosserie im Wesentlichen bündig abschließt. Statt eines Schließkeils wird bei dem vorgeschlagenen Verfahren also der mechanische Anschlag mit dem pneumatischen Sauger eingesetzt. Aus diesem Grund wird das beschriebene Verfahren auch als mechanische Schließkeilsimulation bezeichnet.

Die mechanische Schließkeilsimulation erweist sich insbesondere im Bereich der seitlichen Türen eines Kraftfahrzeugs als sehr gut geeignet zum Einstellen der Spaltmaße und/oder des Versatzes zwischen den Türen und der übrigen Karosserie. An den Seiten eines Kraftfahrzeugs liegen insofern vereinfachte Bedingungen vor, als die Flächen der Kraftfahrzeugkarosserie bzw. bereits eingepasster Klappen im Wesentlichen eben in die Fläche der einzupassenden Klappe übergehen. Schwierigkeiten bereitet der Einsatz der mechanischen Schließkeilsimulation jedoch dort, wo die Flächen der übrigen Karosserie bzw. von bereits eingepassten Klappen nicht eben, sondern in einem bestimmten Winkel in die Fläche der einzupassenden Klappe übergehen. Dies ist beispielsweise im Bereich der Motorhaube, des Kofferraumdeckels oder der Heckklappe eines Kraftfahrzeugs am Übergang zu den Kotflügeln der Fall. An diesen Stellen ist der Einsatz der mechanischen Schließkeilsimulation entweder mit einem enormen Aufwand verbunden, oder aber gänzlich unmöglich.

Zudem wirken bei der mechanischen Schließkeilsimulation über den mechanischen Anschlag, der mittels eines Roboters oder eines ähnlichen Handhabungsgeräts an den Messort geführt wird, relativ hohe Kräfte auf die Flächen der übrigen Karosserie bzw. bereits eingepasster Klappen sowie auf die Flächen der einzupassenden Klappen. Diese Kräfte werden durch den pneumatischen Sauger, der die einzupassende Klappe gegen den mechanischen Anschlag zieht, noch verstärkt. Aufgrund der Kräfte kann es zu einer Verformung der Karosserie bzw. der Klappen kommen, wodurch sich beim Einstellen der Spaltmaße bzw. des Versatzes Ungenauigkeiten ergeben können.

Ausgehend von dem beschriebenen Stand der Technik liegt der vorliegenden Erfindung die Aufgabe zugrunde, eine vereinfachte und kostengünstige Schließkeilsimulation zu ermöglichen, die nach wie vor ein hochgenaues Einpassen einer Klappe in die übrige Karosserie eines Kraftfahrzeugs erlaubt, und zwar unabhängig davon, in welchem Winkel die Fläche der Karosserie bzw. einer bereits eingepassten Klappe in die Fläche der einzupassenden Klappe übergeht.

Zur Lösung dieser Aufgabe schlägt die vorliegende Erfindung ausgehend von dem Verfahren der eingangs genannten Art vor, dass zur Schließkeilsimulation
- Ist-Werte für den Versatz zwischen der Klappe und der übrigen Karosserie optisch erfasst werden;
- abhängig von den erfassten Ist-Werten und von vorgebbaren, der bündig geschlossenen Position der Klappe entsprechenden Soll-Werten für den Versatz Ansteuersignale für mindestens ein im Sinne einer Variation der Position und Ausrichtung der Klappe relativ zu der Karosserie auf die Klappe einwirkendes Stellglied generiert werden; und
- durch Ansteuerung des mindestens einen Stellglieds mit den Ansteuersignalen die Klappe um die Drehachse bewegt und der bündig geschlossenen Position angenähert wird.

Ein wichtiger Aspekt der vorliegenden Erfindung ist darin zu sehen, dass das Verfahren im Bereich des Messortes, wo die Ist-Werte für die Spaltmaße und/oder den Versatz erfasst werden, berührungslos arbeitet. Dadurch ist es möglich, die Ist-Werte selbst im Bereich des Messortes zu erfassen, was bei der mechanischen Schließkeilsimulation nicht möglich ist.

Das gesamte erfindungsgemäße Verfahren ist als eine Steuerung oder Regelung realisiert, wobei als Steuergröße oder Regelgröße der Übergang (Spaltmaße und/oder Versatz) zwischen der einzupassenden Klappe und der übrigen Karosserie dient. Die Steuerung oder Regelung kann ohne großen Aufwand durch Software realisiert werden, die auf einem geeigneten Rechengerät, insbesondere einem Mikroprozessor, abläuft. Durch diese im Wesentlichen softwaremäßige Realisierung der Schließkeilsimulation ergibt sich eine besonders große Flexibilität für den Anwender. Die Flexibilität betrifft beispielsweise eine Vorgabe beliebiger Soll-Werte für die Spaltmaße und/oder den Versatz zwischen der einzupassenden Klappe und der übrigen Karosserie. Auf diese Weise kann für die Feinjustage beispielsweise ein Vorhaltemaß eingestellt werden, so dass seitlich in die Karosserie eines Kraftfahrzeugs eingepasste Türen etwas über die Karosserie nach außen hervorstehen. Durch ein derartiges Einpassen der Klappen in die übrige Karosserie mit Vorhaltemaß können Windgeräusche im Bereich der Spalte reduziert werden.

Hinzu kommt, dass mit der erfindungsgemäßen geregelten bzw. gesteuerten Schließkeilsimulation eine Klappe mit einer besonders hohen Genauigkeit in eine Einbauöffnung einer Fahrzeugkarosserie eingepasst werden kann. Das liegt zum einen daran, dass die Spaltmaße und/oder der Versatz durch geeignete optische Erfassungsmittel hochgenau erfasst werden. Zum anderen erfolgt das Erfassen der Spaltmaße und/oder des Versatzes berührungslos, so dass es nicht zu einer Verformung der Karosserie oder der Klappe kommt.

Gemäß einer vorteilhaften Weiterbildung der vorliegenden Erfindung wird vorgeschlagen, dass der Versatz auf die vorgebbaren Soll-Werte geregelt wird. Gemäß dieser Weiterbildung ist also eine Regelung vorgesehen, durch welche der Übergang (Spaltmaße und/oder Versatz) zwischen der einzupassenden Klappe und der übrigen Karosserie mindestens einem vorgebbaren Soll-Wert angenähert wird. Vorzugsweise wird der Übergang genau auf den Soll-Wert geregelt; unter Umständen kann sich jedoch eine Regelabweichung einstellen. Meistens versucht die Regelung, die Regeldifferenz zwischen erfasstem Ist-Wert und vorgegebenem Soll-Wert bzw. den Übergang zwischen der einzupassenden Klappe und der übrigen Karosserie auf Null zu reduzieren. Der Regelalgorithmus ist vorzugsweise in einem Computerprogramm implementiert, welches auf einem Rechengerät ablauffähig ist. Dem Computerprogramm werden die optisch erfassten Ist-Werte des Übergangs zugeführt. Alternativ können dem Computerprogramm auch einfach Aufnahmen von einem Messort in digitaler Form übermittelt werden, wobei das Computerprogramm die Aufnahmen zur Ermittlung mindestens eines Ist-Werts für den Übergang (die Spaltmaße und/oder den Versatz) am Messort auswertet. Abhängig von den erfassten Ist-Werten und von vorgebbaren Soll-Werten für den Übergang generiert das Computerprogramm Ansteuersignale für die Stellglieder und leitet die Ansteuersignale entweder mittelbar über geeignete Endstufen oder unmittelbar an die Stellglieder weiter.

Eine mathematische Beschreibung des Übergangs zwischen der Klappe und der übrigen Karosserie ist bspw. aus der US 4,498,776; US 4,666,303; US 5,416,590; und US 5,999,265 bekannt. In den genannten Druckschriften sind verschiedene Möglichkeiten beschrieben, einen Übergang zwischen zwei Teilen, vorzugsweise zwischen einer Klappe und der übrigen Karosserie eines Kraftfahrzeugs, analytisch zu beschreiben. Bezüglich der mathematischen Definition eines Übergangs wird auf diese Druckschriften ausdrücklich Bezug genommen. Selbstverständlich sind noch eine Vielzahl anderer analytischer Beschreibungen eines Übergangs denkbar.

Besonders bevorzugt ist, wenn die Soll-Werte für die Spaltmaße und/oder den Versatz der Klappe relativ zu der übrigen Karosserie derart vorgegeben werden, dass sich zwischen der Klappe und der übrigen Karosserie an einem Messort ein positiver Übergang von größer Null ergibt. Ein positiver Übergang entspricht einer derart in die übrige Karosserie eingepassten Klappe, dass diese im Ruhezustand des Kraftfahrzeugs ein wenig über die Fläche der übrigen Karosserie nach außen hervorragt. Eine derartige Vorgabe der Soll-Werte ist insbesondere für das Einpassen der seitlichen Türen in die übrige Karosserie von Bedeutung, da auf diese Weise Windgeräusche, die während der Fahrt im Bereich der Spalte auftreten können, reduziert werden.

Das mindestens eine Stellglied wirkt im Sinne einer Variation der Position und Ausrichtung der Klappe um die Drehachse auf die Klappe ein. Durch eine Bewegung der Klappe um die Drehachse wird eine verformungsfreie Bewegung der Klappe ermöglicht. Dadurch können die Spaltmaße und/oder der Versatz zwischen der beweglichen Klappe und der übrigen Karosserie eines Kraftfahrzeugs wesentlich genauer eingestellt werden.

Bevorzugt ist ferner, dass zunächst Ist-Werte des Versatzes zwischen der Klappe des Kraftfahrzeugs und der übrigen Karosserie an einem ersten Messort erfasst und durch Variation der Position und Ausrichtung der Klappe vorgegebenen Soll-Werten angenähert werden und anschließend an der gleichen Klappe Ist-Werte an mindestens einem weiteren Messort erfasst und vorgegebenen Soll-Werten angenähert werden. Demnach wird also vorgeschlagen, den Versatz einer Klappe zu der übrigen Karosserie an verschiedenen Messorten zu erfassen und die Klappe auf diese Weise bündig zur übrigen Karosserie fein zu justieren und in einer vorgegebenen Position und Ausrichtung relativ zu der übrigen Karosserie einzupassen. Vorzugsweise werden dabei Mittel zum optischen Erfassen der Spaltmaße und/oder des Versatzes von einem Industrie-Roboter oder einem anderen Handhabungsgerät zur Durchführung der Messung an die verschiedenen Messorte bewegt.

Eine relativ zu der übrigen Karosserie bündig feinjustierte Klappe wird vorzugsweise an der Karosserie beweglich festgelegt, d. h. an den Scharnieren oder Gelenken befestigt. Es ist aber auch denkbar, dass das Einpassen der Klappe in der feinjustierten Einbauposition lediglich dazu dient zu prüfen, ob eine bestimmte Klappe in der vorgegebenen Einbauposition der Karosserie unter Einhaltung der vorgegebenen Soll-Werte für die Spaltmaße und/oder den Versatz überhaupt eingepasst werden kann. Falls das der Fall ist, kann die Klappe nach dem Einpassen wieder von der Karosserie gelöst werden, bspw. zum nachfolgenden getrennten Lackieren der Klappe und der übrigen Karosserie.

Es ist aber auch der Fall denkbar, dass sich die einzupassende Klappe nicht in der gewünschten Weise in die übrige Karosserie einpassen lässt bzw. dass sich der Übergang zwischen der einzupassenden Klappe und der übrigen Karosserie nicht auf einen gewünschten Soll-Wert einstellen lässt. In diesem Fall sind verschiedene Maßnahmen denkbar. Zum Einen könnte die Klappe und/oder die an die Klappe angrenzende übrige Karosserie derart plastisch verformt werden, so dass der Übergang an ausgewählten Messorten den vorgegebenen Soll-Werten angenähert wird, falls an mindestens einem Messort die Abweichung zwischen den an die Soll-Werte angenäherten Ist-Werten und den vorgegebenen Soll-Werten einen vorgebbaren Grenzwert übersteigt.

Des Weiteren wäre es denkbar, falls an mindestens einem Messort die Abweichung zwischen den an die Soll-Werte angenäherten Ist-Werten und den vorgegebenen Soll-Werten einen vorgebbaren Grenzwert übersteigt, eine Rückmeldung an eine Herstellungslinie zur Herstellung weiterer Klappen und/oder an eine Anbaulinie zum Anbau weiterer Klappen an die übrige Karosserie von Kraftfahrzeugen zu tätigen und Herstellungs- und/oder Anbauparameter der Herstellungslinie bzw. der Anbaulinie in Abhängigkeit von der Rückmeldung zu variieren. Dabei kann die eingepasste Klappe in ihrer schlecht eingepassten Form und Position und Ausrichtung belassen werden oder eine neue Klappe erneut eingepasst werden. Durch die Rückmeldung kann gewissermaßen ein (langsamer) Regelkreis geschlossen werden, durch den eine Herstellung und ein Anbau weiterer Klappen derart optimiert wird, dass ein optimales Einpassen der Klappen in die Karosserie möglich ist. Der langsame Regelkreis wäre der (schnelleren) erfindungsgemäßen Regelung bzw. Steuerung zum Einpassen einer Klappe in die übrige Karosserie überlagert.

Von besonderer Bedeutung ist die Realisierung des erfindungsgemäßen Verfahrens in der Form eines Computerprogramms. Dabei ist das Computerprogramm auf einem Rechengerät, insbesondere auf einem Mikroprozessor, ablauffähig und zur Ausführung des erfindungsgemäßen Verfahrens programmiert. In diesem Fall wird also die Erfindung durch das Computerprogramm realisiert, so dass dieses Computerprogramm in gleicher Weise die Erfindung darstellt wie das Verfahren, zu dessen Ausführung das Computerprogramm geeignet ist. Das Computerprogramm ist vorzugsweise auf einem Speicherelement abgespeichert. Als Speicherelement kann insbesondere ein elektrisches Speichermedium zur Anwendung kommen, beispielsweise ein Random-Access-Memory (RAM), ein Read-Only-Memory (ROM) oder ein Flash-Speicher.

Als eine weitere Lösung der Aufgabe der vorliegenden Erfindung wird ausgehend von der Vorrichtung der eingangs genannten Art vorgeschlagen, dass die Vorrichtung aufweist:
- Erfassungsmittel zum optischen Erfassen von Ist-Wertenfür den Versatz zwischen der Klappe und der übrigen Karosserie;
- Rechenmittel zum Generieren von Ansteuersignalen für mindestens ein im Sinne einer Variation der Position und Ausrichtung der Klappe relativ zu der Karosserie auf die Klappe einwirkendes Stellglied in Abhängigkeit von den erfassten Ist-Werten und von vorgebbaren, der bündig geschlossenen Position der Klappe entsprechenden Soll-Werten für den Versatz; und
- das mindestens eine Stellglied, das durch Ansteuerung mit den Ansteuersignalen die Klappe um die Drehachse bewegt und der bündig geschlossenen Position annähert.

Gemäß einer vorteilhaften Weiterbildung der vorliegenden Erfindung wird vorgeschlagen, dass die Erfassungsmittel eine Kamera-Laser-Einheit umfassen. Eine solche Kamera-Laser-Einheit umfasst mindestens eine Beleuchtungseinrichtung, insbesondere einen Laser, und mindestens eine Bildaufnahmeeinrichtung, insbesondere eine CCD-Kamera oder eine CMOS-Kamera. Eine solche Kamera-Laser-Einheit wird auch als Laser-Sensor bezeichnet und ist beispielsweise in der DE 103 11 247 A1 ausführlich beschrieben. Bezüglich des Aufbaus und der Funktion einer solchen Kamera-Laser-Einheit wird ausdrücklich auf diese Druckschrift Bezug genommen.

Das Stellglied kann auf beliebige Weise ausgebildet sein. Denkbar wäre beispielsweise ein hydraulischer oder pneumatisch angetriebener Zylinder als Stellglied. Gemäß einer bevorzugten Ausführungsform der Erfindung wird vorgeschlagen, dass das mindestens eine Stellglied einen Elektromotor umfasst. Vorteilhafterweise umfasst das mindestens eine Stellglied einen elektrischen Schrittmotor.

Schließlich wird vorgeschlagen, dass die Vorrichtung einen Industrie-Roboter oder ein anderes Handhabungsgerät aufweist, an dem die Erfassungsmittel befestigt sind und welches die Erfassungsmittel an vorgebbare Messorte zum Erfassen der dortigen Ist-Werte für den Versatz zwischen der Klappe des Kraftfahrzeugs und der übrigen Karosserie bewegt.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Fig. 1: eine erfindungsgemäße Vorrichtung zum Einstellen von Spaltmaßen und/oder eines Versatzes zwischen einer beweglichen Klappe eines Kraftfahrzeugs und der übrigen Fahrzeugkarosserie gemäß einer bevorzugten Ausführungsform;
- Fig. 2: einen Ausschnitt der erfindungsgemäßen Vorrichtung nach Figur 1 mit Erfassungsmitteln zum optischen Erfassen der Spaltmaße und/oder des Versatzes zwischen der einzupassenden Klappe und der übrigen Karosserie gemäß einer bevorzugten Ausführungsform;
- Fig. 3: eine schematische Darstellung eines Übergangs kleiner Null zwischen einer Klappe und der übrigen Karosserie eines Kraftfahrzeugs;
- Fig. 4: eine schematische Darstellung eines Übergangs von annähernd Null zwischen einer Klappe und der übrigen Karosserie eines Kraftfahrzeugs;
- Fig. 5: ein von optischen Erfassungsmitteln der erfindungsgemäßen Vorrichtung aufgenommenes Bild bei einem Übergang kleiner Null zwischen einer Klappe und der übrigen Karosserie eines Kraftfahrzeugs;
- Fig. 6: ein von optischen Erfassungsmitteln der erfindungsgemäßen Vorrichtung aufgenommenes Bild bei einem Übergang von annähernd Null zwischen einer Klappe und der übrigen Karosserie eines Kraftfahrzeugs;
- Fig. 7: ein von optischen Erfassungsmitteln der erfindungsgemäßen Vorrichtung aufgenommenes Bild bei einem Übergang größer Null zwischen einer Klappe und der übrigen Karosserie eines Kraftfahrzeugs; und
- Fig. 8: eine Regelkreisstruktur zur Veranschaulichung des erfindungsgemäßen Verfahrens zum Einstellen der Spaltmaße und/oder des Versatzes zwischen einer Klappe und der übrigen Karosserie eines Kraftfahrzeugs gemäß einer bevorzugten Ausführungsform.

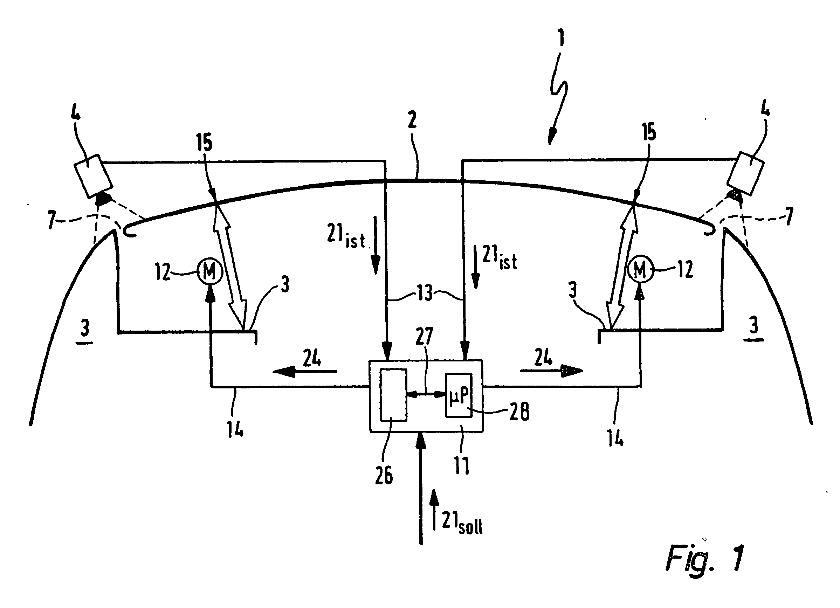

In Figur 1 ist eine erfindungsgemäße Vorrichtung in ihrer Gesamtheit mit dem Bezugszeichen 1 bezeichnet. Die Vorrichtung 1 dient zum Einstellen der Spaltmaße und/oder eines Versatzes zwischen einer beweglichen Klappe 2 eines Kraftfahrzeugs und der übrigen Karosserie 3 des Kraftfahrzeugs. Figur 1 zeigt einen vertikalen Schnitt durch das Kraftfahrzeug quer zu einer Längsachse des Fahrzeugs. Als bewegliche Klappe 2 dient in dem dargestellten Beispiel eine Motorhaube oder ein Kofferraumdeckel. Die übrige Karosserie 3 des Kraftfahrzeugs wird durch die Kotflügel repräsentiert.

Die bewegliche Klappe 2 wird zunächst in einer grobjustierten Einbauposition über Scharniere oder Gelenke an der übrigen Karosserie 3 befestigt, so dass die Klappe 2 um eine Drehachse drehbar ist. Das Einpassen der beweglichen Klappe 2 in der grobjustierten Einbauposition in einen dafür vorgesehenen Einbauraum der Karosserie 3 wird vorzugsweise mittels eines Industrie-Roboters oder eines anderen Handhabungsgerätes ausgeführt. Gehalten wird die in der grobjustierten Einbauposition eingepasste bewegliche Klappe 2 dann an den Scharnieren und wahlweise zusätzlich noch durch den Industrie-Roboter oder das Handhabungsgerät.

Im Anschluss an die Grobjustage muss die Klappe 2 in einer feinjustierten Einbauposition in den Einbauraum der Karosserie 3 eingepasst werden. Die Feinjustage ist erforderlich, um vorgebbare Werte für die Spaltmaße und/oder den Versatz möglichst genau einhalten zu können. Dies ist insbesondere im Hinblick darauf wichtig, dass ungenaue Spaltmaße oder ein zu großer Versatz der Klappe 2 relativ zu der übrigen Karosserie 3 eines Kraftfahrzeugs zu störenden Windgeräuschen während der Fahrt führen kann. Außerdem wird der optische Eindruck, den das Kraftfahrzeug auf Beobachter ausübt, durch ungleichmäßige Spaltmaße oder einen zu großen Versatz beeinträchtigt. Dies gilt insbesondere für Fahrzeuge, bei denen Zierleisten oder Kraftfahrzeugleuchten nicht durch einen Spalt begrenzt sind, sondern sich zu beiden Seiten des Spaltes erstrecken. In solchen Fällen wird ein ungleichmäßiger oder zu großer Spalt oder Versatz besonders deutlich.

Nach der Feinjustage der Klappe 2 relativ zu der übrigen Karosserie 3 wird die Klappe 2 entweder in der feinjustierten Einbauposition an der Karosserie 3 festgelegt oder aber, beispielsweise zum getrennten Lackieren der Klappen 2 und der Karosserie 3, auseinander gebaut. In dem letzten Fall dient das Einpassen der Klappe 2 in die übrige Karosserie 3 lediglich dazu festzustellen, ob die Klappe 2 aufgrund der Form der Klappe 2 bzw. der übrigen Karosserie 3 bei einer späteren Endmontage in den für sie vorgesehenen Einbauraum der Karosserie 3 unter Beachtung der vorgegebenen Soll-Werte für die Spaltmaße und/oder den Versatz überhaupt in zufriedenstellender Weise eingebaut werden kann.

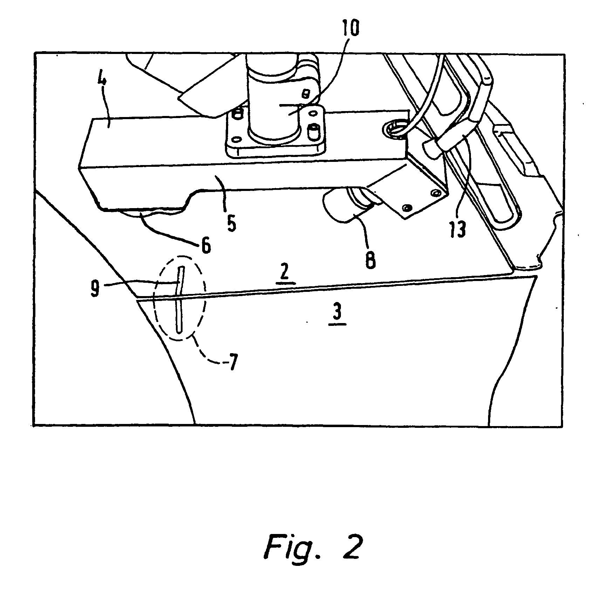

Das erfindungsgemäße Verfahren betrifft insbesondere die Feinjustage der beweglichen Klappe 2 relativ zu der übrigen Karosserie 3 des Kraftfahrzeugs. Die erfindungsgemäße Vorrichtung 1 umfasst Erfassungsmittel 4, die eine Bilderfassungseinrichtung 8 aufweisen, die vorzugsweise als eine CCD (Charged Coupled Device) -Kamera oder als eine CMOS (Complimentary Metal Oxyd Semiconductor)-Kamera ausgebildet ist (vergleiche Figur 2). Die Erfassungsmittel 4 dienen zum optischen Erfassen der Ist-Werte für die Spaltmaße und/oder den Versatz zwischen der grobjustierten Klappe 2 und der übrigen Karosserie 3.

Die Erfassungsmittel 4 werden nachfolgend anhand der Figur 2 näher erläutert. Dort sind als eine Kamera-Laser-Einheit bzw. als ein sog. Laser-Sensor ausgebildete Erfassungsmittel 4 dargestellt. Diese umfassen ein Trägerelement 5, an dem die Bilderfassungseinrichtung 8 befestigt ist. Zusätzlich ist an dem Trägerelement 5 eine Beleuchtungseinrichtung 6 befestigt, die zum Ausleuchten eines Messorts 7 im Bereich eines Übergangs zwischen der Klappe 2 und der übrigen Karosserie 3 und/oder zum Abbilden eines Musters auf den zu erfassenden Flächen am Messort 7 dient. Die Beleuchtungseinrichtung 6 ist beispielsweise als ein Laser ausgebildet. Streng genommen genügt es, wenn die Erfassungsmittel 4 lediglich eine optische Bilderfassungseinrichtung 8 aufweisen. Durch die Beleuchtungseinrichtung 6, durch welche der Messort 7 ausgeleuchtet und mit einem Muster versehen wird, wird das Erfassen der Spaltmaße und/oder des Versatzes zwischen der Klappe 3 und der übrigen Karosserie 2 jedoch deutlich vereinfacht und die Genauigkeit verbessert.

In dem Ausführungsbeispiel aus Figur 2 erzeugt der Laser 6 im Bereich des Messortes 7 eine scharfe Lichtlinie 9, die quer zu dem Spalt zwischen der Klappe 2 und der Karosserie 3 verläuft. Selbstverständlich könnte die Beleuchtungseinrichtung 6 auch parallel zu dem Spalt verlaufende Lichtlinien an den einander zugewandten Kanten der Klappe 2 und der Karosserie 3 erzeugen, wie dies bspw. aus der DE 199 10 699 bzw. der entsprechenden US 6,529,283 bekannt ist. Erfindungsgemäß kann jedes beliebige Verfahren zum Erfassen des Übergangs zwischen der Klappe 2 und der Karosserie 3 eingesetzt werden.

Die Erfassungsmittel 4 sind an einem distalen Ende eines Roboterarms 10 eines Industrie-Roboters oder an einem beliebig anderen Handhabungsgerät befestigt. Durch den Roboter bzw. das Handhabungsgerät werden die Erfassungsmittel 4 an vorgebbare Messorte 7 zum Erfassen der dortigen Ist-Werte für die Spaltmaße und/oder den Versatz zwischen der Klappe 3 des Kraftfahrzeugs und der übrigen Karosserie 2 bewegt.

Zurückkommend auf Figur 1 umfasst die Vorrichtung 1 des weiteren Rechenmittel 11, die vorzugsweise als ein Personalcomputer (PC) ausgebildet sind. Die Rechenmittel 11 umfassen ein elektronisches Speicherelement 26, auf dem ein Computerprogramm abgespeichert ist, das zur Ausführung des erfindungsgemäßen Verfahrens programmiert ist. Das Speicherelement 26 ist vorzugsweise als ein Flash-Speicher ausgebildet. Zur Ausführung des Computerprogramms wird dieses entweder abschnitts- bzw. befehlsweise oder aber als ganzes über eine Datenverbindung 27 an ein Rechengerät 28 übertragen. Das Rechengerät 28 ist vorzugsweise als ein Mikroprozessor ausgebildet.

Die Rechenmittel 11 dienen unter anderem zum Generieren von Ansteuersignalen 24 für Stellglieder 12. Die Ansteuersignale 24 werden in Abhängigkeit von den erfassten Ist-Werten 21ᵢₛₜ für die Spaltmaße und/oder den Versatz zwischen der grobjustierten Klappe 2 und der übrigen Karosserie 3, sowie in Abhängigkeit von vorgebbaren Soll-Werten 21ₛₒₗₗ für die Spaltmaße und/oder den Versatz ermittelt. Die von den Erfassungsmitteln 4 erfassten Ist-Werte 21ᵢₛₜ werden über Datenleitungen 13 an die Rechenmittel 11 übertragen. Die von den Rechenmitteln 11 generierten Ansteuersignale 24 werden über Datenleitungen 14 an die Stellglieder 12 übertragen. Die Stellglieder 12 wirken zwischen der Klappe 2 und der Karosserie 3 im Sinne einer Variation der Position und Ausrichtung der Klappe 2 relativ zu der übrigen Karosserie 3. Durch die Stellglieder 12 wird die Klappe 2 vorzugsweise um die durch die Scharniere oder Gelenke, über welche die Klappe 2 an der Karosserie 3 befestigt ist, definierte Drehachse bewegt.

In dem vorliegenden Ausführungsbeispiel sind die Stellglieder 12 als elektrische Linearmotoren oder Schrittmotoren ausgebildet, die im Sinne einer Variation der Position und Ausrichtung der Klappe 2 relativ zu der übrigen Karosserie 3 auf die Klappe 2 in Wirkpunkten 15 einwirken. Die Stellglieder 12 bzw. die Wirkpunkte 15 sind vorzugsweise an einer den Scharnieren bzw. Gelenken gegenüberliegenden Seite der Klappe 2 angeordnet. Mittels der Stellglieder 12 kann die Klappe 2 nach oben und unten sowie vorzugsweise auch nach links und rechts (in der in Figur 1 dargestellten Ansicht) bewegt werden.

Ein Übergang von der Klappe 2 in die übrige Karosserie 3 wird durch die Spaltmaße und/oder den Versatz der Klappe 2 relativ zu der übrigen Karosserie 3 bestimmt. Ein Übergang kann entweder als das subjektive Empfinden eines oder mehrerer Betrachter (z. B. der für Qualitätssicherung zuständigen Mitarbeiter) oder aber objektiv durch eine bestimmte mathematische Beschreibung definiert werden. Eine mathematische Beschreibung des Übergangs ist bspw. aus der US 4,498,776; US 4,666,303; US 5,416,590; und US 5,999,265 bekannt. In den genannten Druckschriften sind verschiedene Möglichkeiten beschrieben, einen Übergang zwischen zwei Teilen, vorzugsweise zwischen einer Klappe und der übrigen Karosserie eines Kraftfahrzeugs, analytisch zu beschreiben. Bezüglich der mathematischen Definition eines Übergangs wird auf diese Druckschriften ausdrücklich Bezug genommen. Selbstverständlich sind noch eine Vielzahl anderer analytischer Beschreibungen eines Übergangs denkbar.

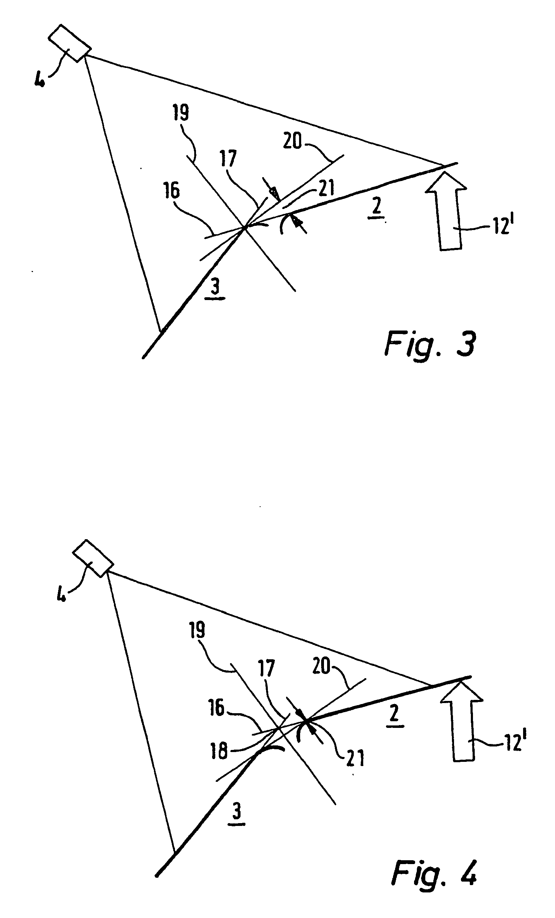

In Figur 3 ist ein Fall dargestellt, bei dem ein Abstand 21 zwischen einer die Fläche der übrigen Karosserie 3 berührenden Messgeraden 20 und der Fläche der Klappe 2 deutlich kleiner als Null ist, also ein betragsmäßig relativ großer Übergang besteht. Zur Korrektur dieses negativen Übergangs wird erfindungsgemäß die Klappe 2 durch die Stellglieder 12 derart geregelt in Richtung eines Pfeils 12' bewegt, bis der Abstand 21 einen vorgebbaren Soll-Wert, vorzugsweise Null, erreicht hat. Mit dem Bezugszeichen 16 ist eine erste Extrapolationsfunktion bezeichnet, mit der eine Fläche der Klappe 2 über die Fläche hinaus extrapoliert wird. Mit dem Bezugszeichen 17 ist eine zweite Extrapolationsfunktion bezeichnet, mit der eine Fläche der Karosserie 3 über die Fläche hinaus extrapoliert wird. Ein Schnittpunkt der beiden Funktionen 16, 17 ist mit dem Bezugszeichen 18 bezeichnet. Mit dem Bezugszeichen 19 ist eine Lotgerade bezeichnet, welche den zwischen den Funktionen 16, 17 aufgespannten Winkel halbiert. Mit dem Bezugszeichen 20 ist die Messgerade bezeichnet, welche die Lotgerade 19 in einem rechten Winkel schneidet und welche die Fläche der Karosserie 3 tangential berührt.

In Figur 4 ist die Klappe 2 nach Abschluss der Feinjustage in ihrer feinjustierten Einbauposition dargestellt. Der Abstand 21 ist durch die erfindungsgemäße Regelung der Einbauposition auf nahezu Null reduziert worden.

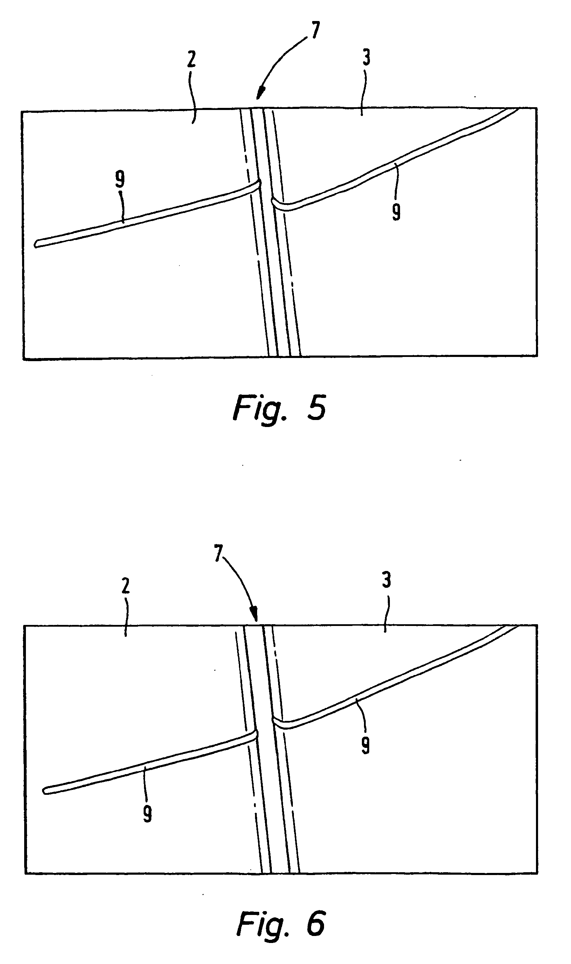

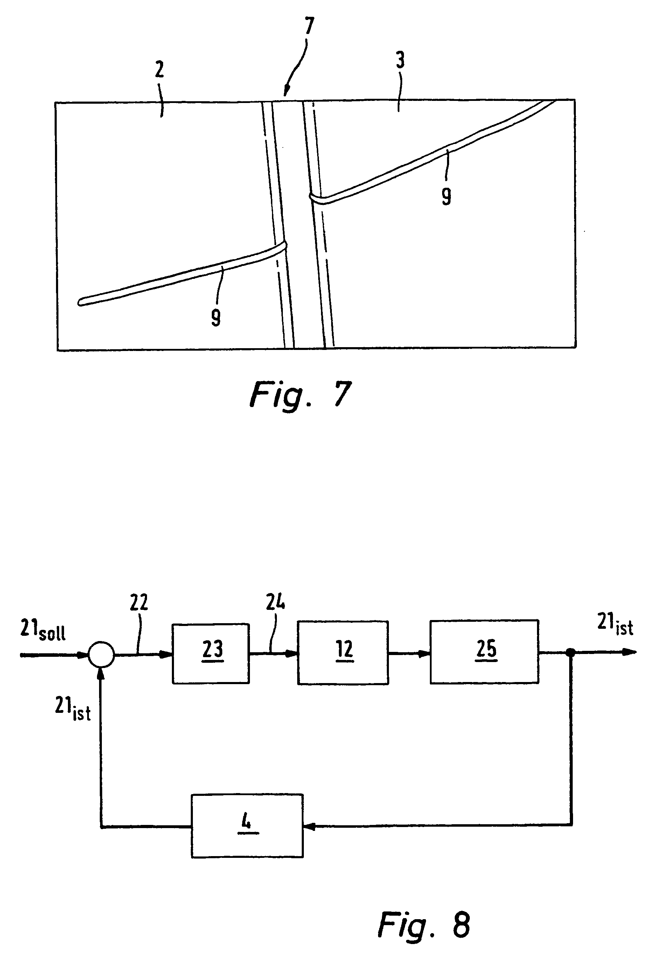

In den Figuren 5 bis 7 sind verschiedene Bilder dargestellt, die von den optischen Erfassungsmitteln 4 im Bereich eines Messortes 7 aufgenommen wurden. In Figur 5 ist das von einem Laser-Sensor aufgenommene Bild mit einem Übergang von -5 mm dargestellt. In Figur 6 ist das gleiche Bild, jedoch mit einem Übergang von 0 mm und in Figur 7 nochmals das gleiche Bild, jedoch mit einem Übergang von +5 mm dargestellt. Die durch die optischen Erfassungsmittel 4 aufgenommenen Bilder gemäß den Figuren 5 bis 7 werden in den Rechenmitteln 11 ausgewertet, um den Übergang (Spaltmaß und/oder Versatz) zwischen der Klappe 2 und der übrigen Karosserie 3 im Messort 7 zu ermitteln. In den Rechenmitteln 11 werden dann in Abhängigkeit von den auf diese Weise ermittelten Ist-Werten 21ᵢₛₜ, sowie in Abhängigkeit von den vorgebbaren Soll-Werten 21ₛₒₗₗ (vorzugsweise Übergang gleich Null) die Ansteuersignale 24 für die Stellglieder 12 generiert.

In Figur 8 ist eine Regelkreisstruktur zur Veranschaulichung des erfindungsgemäßen Verfahrens dargestellt. Dabei wird von den Erfassungsmitteln 4 (Laser-Sensor) ein Ist-Wert des Übergangs 21ᵢₛₜ erfasst und der gemessene Ist-Wert 21ᵢₛₜ von einem vorgebbaren Soll-Wert für den Übergang 21ₛₒₗₗ abgezogen. Vorzugsweise wird als Soll-Wert 21ₛₒₗₗ ein Übergang = 0 vorgegeben. Die Differenz zwischen Soll- und Ist-Wert wird als Regeldifferenz 22 bezeichnet. Die Regeldifferenz 22 wird einem Regler 23 zugeführt, der vorzugsweise softwaremäßig realisiert ist. Dazu wird ein entsprechendes Computerprogramm in den Rechenmitteln 11 der Vorrichtung 1 abgearbeitet. Der Regler 23 generiert anhand der Regeldifferenz 22 die Ansteuersignale 24 für die Stellglieder 12. Die Ansteuersignale 24 bilden die Regelgröße der Regelung. Die Ansteuerung der Stellglieder 12 mit den generierten Ansteuersignalen 24 bewirkt eine Verschiebung der Klappe 2 relativ zu der übrigen Karosserie 3 (in Position und/oder Ausrichtung) um einen bestimmten Betrag. Diese Verschiebung der Klappe 2 ist durch einen Funktionsblock 25 symbolisiert. Aufgrund der Verschiebung 25 der Klappe 2 ergibt sich ein neuer Ist-Wert 21ᵢₛₜ für den Übergang, der wiederum durch die Erfassungsmittel 4 erfasst wird. Ein mehrmaliges Durchlaufen der in Figur 8 dargestellten Regelkreisstruktur bewirkt eine Annäherung des Ist-Werts 21ᵢₛₜ für den Übergang an den vorgegebenen Soll-Wert 21ₛₒₗₗ für den Übergang. Falls die sich einstellende Regelabweichung Null beträgt, wird die Regelkreisstruktur so lange durchlaufen, bis der Ist-Wert 21ᵢₛₜ des Übergangs gleich dem Soll-Wert 21ₛₒₗₗ des Übergangs ist.

## Patentansprüche

1. Verfahren zur Schließkeilsimulation vor einem Lackieren und vor einer Endmontage einer Karosserie (3) eines Kraftfahrzeugs, wobei eine Klappe (2) des Kraftfahrzeugs, die relativ zu der übrigen Karosserie (3) des Kraftfahrzeugs um eine Drehachse bewegbar ist; in eine bündig geschlossene Position relativ zu der übrigen Karosserie (3) gebracht und dort gehalten wird, um anschließend die Spaltmaße und/oder den Versatz zwischen der Klappe (2) in der bündig geschlossenen Position und der übrigen Karosserie (3) des Kraftfahrzeugs zu erfassen, **dadurch gekennzeichnet, dass** zur Schließkeilsimulation
- Ist-Werte (21 ist) für den Versatz zwischen der Klappe (2) und der übrigen Karosserie (3) optisch erfasst werden;
- abhängig von den erfassten Ist-Werten (21_ist) und von vorgebbaren, der bündig geschlossenen Position der Klappe (2) entsprechenden Soll-Werten (21_soll) für den Versatz Ansteuersignale (24) für mindestens ein im Sinne einer Variation der Position und Ausrichtung der Klappe (2) relativ zu der Karosserie (3) auf die Klappe (2) einwirkendes Stellglied (12) generiert werden; und
- durch Ansteuerung des mindestens einen Stellglieds (12) mit den Ansteuersignalen (24) die Klappe (2) um die Drehachse bewegt und der bündig geschlossenen Position angenähert wird.

2. Verfahren nach Anspruch 1, **dadurch gekennzeichnet, dass** der Versatz auf die vorgebbaren Soll-Werte (21_soll) geregelt wird.

3. Verfahren nach Anspruch 1 oder 2, **dadurch gekennzeichnet, dass** das mindestens eine Stellglied (12) im Sinne einer Variation der Position und Ausrichtung der Klappe (2) um die Drehachse auf die Klappe (2) einwirkt.

4. Verfahren nach einem der Ansprüche 1 bis 3, **dadurch gekennzeichnet, dass** zunächst Ist-Werte (21_ist) des Versatzes zwischen der Klappe (2) des Kraftfahrzeugs und der übrigen Karosserie (3) an einem ersten Messort (7) erfasst und durch Variation der Position und Ausrichtung der Klappe (2) vorgegebenen Soll-Werten (21_soll) angenähert werden und anschließend an der gleichen Klappe (2) Ist-Werte (21_ist) an mindestens einem weiteren Messort (7) erfasst und vorgegebenen Soll-Werten (21_soll) angenähert werden.

5. Computerprogramm, das auf einem Rechengerät, insbesondere auf einem Mikroprozessor, ablauffähig ist, **dadurch gekennzeichnet, dass** das Computerprogramm zur Ausführung eines Verfahrens nach einem der Ansprüche 1 bis 4 programmiert ist.

6. Computerprogramm nach Anspruch 5, **dadurch gekennzeichnet, dass** das Computerprogramm auf einem Speicherelement, insbesondere auf einem Flash-Speicher, einem Random-Access-Memory oder einem Read-Only-Memory, abgespeichert ist.

7. Vorrichtung (1) zur Schließkeilsimulation vor einem Lackieren und vor einer Endmontage einer Karosserie (3) eines Kraftfahrzeugs, wobei die Vorrichtung (1) Mittel aufweist, um eine Klappe (2) des Kraftfahrzeugs, die relativ zu der übrigen Karosserie (3) des Kraftfahrzeugs um eine Drehachse bewegbar ist, in eine bündig geschlossene Position relativ zu der übrigen Karosserie (3) zu bringen und dort zu halten, um anschließend die Spaltmaße und/oder den Versatz zwischen der Klappe (2) in der bündig geschlossenen Position und der übrigen Karosserie (3) des Kraftfahrzeugs zu erfassen, **dadurch gekennzeichnet, dass** die Vorrichtung (1) aufweist:
- Erfassungsmittel (4) zum optischen Erfassen von Ist-Werten (21_ist) für den Versatz zwischen der Klappe (2) und der übrigen Karosserie (3);
- Rechenmittel (11) zum Generieren von Ansteuersignalen (24) für mindestens ein im Sinne einer Variation der Position und Ausrichtung der Klappe (2) relativ zu der Karosserie (3) auf die Klappe (2) einwirkendes Stellglied (12) in Abhängigkeit von den erfassen Ist-Werten (21_ist) und von vorgebbaren, der bündig geschlossenen Position der Klappe (2) entsprechenden Soll-Werten (21_soll) für den Versatz; und
- das mindestens eine Stellglied (12), das durch Ansteuerung mit den Ansteuersignalen (24) die Klappe (2) um die Drehachse bewegt und der bündig geschlossenen Position annähert.

8. Vorrichtung (1) nach Anspruch 7, **dadurch gekennzeichnet, dass** die Erfassungsmittel (4) eine Kamera-Laser-Einheit umfassen mit mindestens einer Beleuchtungseinrichtung (6), insbesondere einem Laser, und mindestens einer Bildaufnahmeeinrichtung (8), insbesondere einer CCD- oder CMOS-Kamera.

9. Vorrichtung (1) nach Anspruch 7 oder 8, **dadurch gekennzeichnet, dass** das mindestens eine Stellglied (12) einen Elektromotor umfasst.

10. Vorrichtung (1) nach Anspruch 9, **dadurch gekennzeichnet, dass** der Elektromotor als ein Schrittmotor ausgebildet ist.

11. Vorrichtung (1) nach einem der Ansprüche 7 bis 10, **dadurch gekennzeichnet, dass** die Vorrichtung (1) einen Industrie-Roboter oder ein anderes Handhabungsgerät aufweist, an dem die Erfassungsmittel (4) befestigt sind und welches die Erfassungsmittel (4) an vorgebbare Messorte (7) zum Erfassen der dortigen Ist-Werte (21_ist) für den Versatz zwischen der Klappe (2) des Kraftfahrzeugs und der übrigen Karosserie (3) bewegt.

## Claims

1. Method of simulating a locking wedge or wedges prior to the painting or final assembly of the bodywork (3) of a motor vehicle, an openable section (2) of the motor vehicle which can be moved about an axis of rotation relative to the rest of the bodywork (3) of the motor vehicle being brought to a position relative to the rest of the bodywork (3) in which it is closed and flush and being held there to enable the size of gap and/or the misalignment between the openable section (2) and the rest of the bodywork (3) of the vehicle in the closed and flush position then to be sensed, **characterised in that**, for the simulation of the locking wedge or wedges,
- actual values (21_ist) of the misalignment between the openable section (2) and the rest of the bodywork (3) are sensed optically,
- actuating signals (24) for at least one positioner (12) which acts on the openable section (2) to vary the position and alignment of the openable section (2) relative to the bodywork (3) are generated as a function of the actual values (21_ist) which are sensed and as a function of presettable desired values (21_soll) for the misalignment which represent the closed and flush position of the openable section (2), and
- by actuating the at least one positioner (12) with the actuating signals (24), the openable section (2) is moved about the axis of rotation and is adjusted towards the closed and flush position.

2. Method according to claim 1, **characterised in that** the misalignment is regulated to the presettable desired values (21_soll).

3. Method according to claim 1 or 2, **characterised in that** the at least one positioner (12) acts on the openable section (2) about the axis of rotation to vary the position and alignment of the openable section (2).

4. Method according to one of claims 1 to 3, **characterised in that** actual values (21_ist) of the misalignment between the openable section (2) of the motor vehicle and the rest of the bodywork (3) are first measured at a first point of measurement (7) and are adjusted towards preset desired values (21_soll) by varying the position and alignment of the openable section (2), and actual values (21_ist) are then sensed at the same openable section (2) at at least one further point of measurement (7) and are adjusted towards preset desired values (21_soll).

5. Computer program which can be run on a computing unit and in particular on a microprocessor, **characterised in that** the computer program is programmed to carry out a method according to one of claims 1 to 4.

6. Computer program according to claim 5, **characterised in that** the computer program is stored on a memory member and in particular on a flash memory, a random access memory or a read-only memory.

7. Apparatus (1) for simulating a locking wedge or wedges prior to the painting or final assembly of the bodywork (3) of a motor vehicle, the apparatus (1) having means for bringing an openable section (2) of the motor vehicle which can be moved about an axis of rotation relative to the rest of the bodywork (3) of the motor vehicle to a position relative to the rest of the bodywork (3) in which it is closed and flush and holding it there to enable the size of gap and/or the misalignment between the openable section (2) and the rest of the bodywork (3) of the vehicle in the closed and flush position then to be sensed, **characterised in that** the apparatus (1) has
- sensing means (4) for the optical sensing of actual values (21-ist) of the misalignment between the openable section (2) and the rest of the bodywork (3),
- calculating means (11) for generating, as a function of the actual values (21_ist) which are sensed and as a function of presettable desired values (21_soll) for the misalignment which represent the closed and flush position of the openable section (2), actuating signals (24) for at least one positioner (12) which acts on the openable section (2) to vary the position and alignment of the openable section (2) relative to the bodywork (3), and
- the at least one positioner (12) which, by being actuated with the actuating signals (24), moves the openable section (2) about the axis of rotation and adjusts it towards the closed and flush position.

8. Apparatus (1) according to claim 7, **characterised in that** the sensing means (4) comprise a camera-and-laser unit having at least one lighting means (6), and in particular a laser, and at least one image pick-up means (8) and in particular a CCD or CMOS camera.

9. Apparatus (1) according to claim 7 or 8, **characterised in that** the at least one positioner (12) comprises an electric motor.

10. Apparatus (1) according to claim 9, **characterised in that** the electric motor is in the form of a stepping motor.

11. Apparatus (1) according to one of claims 7 to 10, **characterised in that** the apparatus (1) has an industrial robot or some other handling unit to which the sensing means (4) are fastened and which moves the sensing means (4) to presettable points of measurement (7) for sending the actual values (21_ist), at the latter, of the misalignment between the openable section (2) of the motor vehicle and the rest of the bodywork (3).

## Revendications

1. Procédé de simulation d'un coin de verrouillage avant la mise en peinture et avant le montage final d'une carrosserie (3) de véhicule automobile, selon lequel
un volet (2) du véhicule est mobile autour d'un axe de rotation par rapport à la partie restante de carrosserie (3) du véhicule, entre une position fermée, à niveau par rapport au restant de la carrosserie (3) et il y est maintenu, pour ensuite, saisir la mesure le l'intervalle et/ou le décalage entre le volet (2) en position fermée, à niveau, et la partie restante de carrosserie (3) du véhicule,
**caractérisé en ce que**
pour simuler le coin de verrouillage :
- on saisit optiquement les valeurs réelles (21_ist) du décalage entre le volet (2) et la partie restante de carrosserie (3),
- en fonction des valeurs réelles (21_ist) saisies et de valeurs de consigne (21_soll), prédéfinies, correspondant à la position fermée à niveau du volet (2), on génère pour le décalage, des signaux de commande (24) pour au moins un organe d'actionnement (12) agissant dans le sens d'une variation de la position et de l'alignement du volet (2) par rapport à la carrosserie (3) sur le volet (2), et
- en commandant au moins un organe d'actionnement (12) avec des signaux de commande (24), on déplace le volet (2) autour de l'axe de rotation en le rapprochant de la position fermée, à niveau.

2. Procédé selon la revendication 1,
**caractérisé en ce qu'**
on régule le décalage sur les valeurs de consigne prédéfinies (21_soll).

3. Procédé selon la revendication 1 ou 2,
**caractérisé en ce qu'**
au moins un organe d'actionnement (12) agit sur le volet (2) dans le sens d'une variation de la position et de l'alignement du volet (2) autour de l'axe de rotation.

4. Procédé selon l'une des revendications 1 à 3,
**caractérisé en ce qu'**
- on saisit tout d'abord les valeurs réelles (21_ist) du décalage entre le volet (2) du véhicule et la partie restante de carrosserie (3), en un premier point de mesure (7), et
- par variation de la position et de l'alignement du volet (2), on se rapproche des valeurs de consigne prédéfinies (21_roll), et
- ensuite, sur le même volet (2), on saisit les valeurs réelles (21_ist) en au moins un autre point de mesure (7) et on se rapproche des valeurs de consigne (21_roll), prédéfinies.

5. Programme d'ordinateur exécuté par un calculateur, notamment un microprocesseur,
**caractérisé en ce que**
le programme d'ordinateur est programmé pour exécuter un procédé selon l'une des revendications 1 à 4.

6. Programme d'ordinateur selon la revendication 5,
**caractérisé en ce que**
le programme d'ordinateur est enregistré sur un élément de mémoire, notamment sur une mémoire flash, une mémoire vive RAM, ou une mémoire morte ROM.

7. Dispositif (1) de simulation d'un coin de verrouillage avant la mise en peinture et avant le montage final d'une carrosserie (3) de véhicule automobile,
le dispositif (1) comportant des moyens pour déplacer un volet (2) du véhicule autour d'un axe de rotation par rapport à la partie restante de carrosserie (3) du véhicule, dans une position fermée, à niveau par rapport au restant de carrosserie (3), et maintenir dans cette position, pour ensuite saisir la mesure de l'intervalle et/ou le décalage entre le volet (2) en position fermée à niveau, et la partie restante de carrosserie (3) du véhicule,
**caractérisé en ce que**
le dispositif (1) comprend :
- des moyens de saisie (4) pour saisir par voie optique les valeurs réelles (21_ist) du décalage entre le volet (2) et la partie restante de carrosserie (3),
- des moyens de calcul (11) pour générer des signaux de commande (24) pour au moins un organe d'actionnement (12) agissant sur le volet (2) dans le sens d'une variation de la position et de l'alignement du volet (2) par rapport à la carrosserie (3), en fonction des valeurs réelles saisies (21_ist), et de valeurs de consigne (21_soll) prédéfinies, correspondant à la position fermée du volet (2), pour le décalage, et
- au moins un organe d'actionnement (12) commandé par les signaux de commande (24), déplace le volet (2) autour de l'axe de rotation et le rapproche de la position fermée à niveau.

8. Dispositif (1) selon la revendication 7,
**caractérisé en ce que**
les moyens de saisie (4) comprennent un module caméra-laser avec au moins une installation d'éclairage (6), notamment un laser, et au moins une installation de prise de vue (8), notamment une caméra CCD ou une caméra CMOS.

9. Dispositif (1) selon la revendication 7 ou 8,
**caractérisé en ce qu'**
au moins un organe d'actionnement (12) est un moteur électrique.

10. Dispositif (1) selon la revendication 9,
**caractérisé en ce que**
le moteur électrique est un moteur pas-à-pas.

11. Dispositif (1) selon l'une des revendications 7 à 10,
**caractérisé en ce que**
le dispositif (1) est un robot industriel ou un autre appareil de manutention, auxquels sont fixés les moyens de saisie (4) pour déplacer les moyens de saisie (4) à des points de mesure prédéfinis (7) pour saisir les valeurs réelles (21_ist) à ces endroits, correspondant au décalage entre le volet (2) du véhicule et la partie restante de carrosserie (3).
